# EUROPÄISCHE PATENTSCHRIFT

(11) **EP 1 613 421 B1**
(45) Veröffentlichungstag und Bekanntmachung des Hinweises auf die Patenterteilung: **31.05.2006**
(21) Anmeldenummer: 05706896.7
(22) Anmeldetag: 15.01.2005
(51) Int. Cl.: B01J 8/02

(54) **VERFAHREN UND VORRICHTUNG ZUM EINDÜSEN VON SAUERSTOFF MIT RADIALER KATALYSATORDURCHSTRÖMUNG**
METHOD AND DEVICE FOR THE INJECTION OF OXYGEN WITH RADIAL CATALYST THROUGHFLOW
PROCEDE ET DISPOSITIF D'INTRODUCTION D'OXYGENE PAR BUSES, AVEC ECOULEMENT RADIAL A TRAVERS LE CATALYSEUR

(30) Priorität: 21.01.2004 DE 102004003070
(43) Veröffentlichungstag der Anmeldung: 11.01.2006
(73) Patentinhaber: Uhde GmbH, 44141 Dortmund (DE)
(72) Erfinder: KOWOLL, Johannes, 44799 Bochum (DE)
(74) Vertreter: Dabringhaus, Walter
(86) Internationale Anmeldenummer: PCT/EP2005/000369
(87) Internationale Veröffentlichungsnummer: WO 2005/070530

(56) Entgegenhaltungen:
- US-A- 4 705 621
- US-A- 4 971 771
- US-A1- 2002 098 136

## Beschreibung

Die Erfindung betrifft ein Verfahren und eine Vorrichtung zum Eindüsen von Sauerstoff in einen Synthesereaktor, beispielsweise zur Oxidehydrierung, mit im wesentlichen radialer Durchströmung des Gasgemisches durch eine Katalysatorpackung.

Es gibt eine Reihe von katalytischen Verfahren, bei denen in einem Reaktor dem behandelnden Gas zusätzlich Sauerstoff zugeführt wird, etwa bei der sogenannten Oxidehydrierung von Propan oder Butan, wobei der Sauerstoff in den Oxidehydrierungsreaktoren dem einströmenden Gas vor dem Eintritt in den Katalysator beigemischt wird. Es hat sich gezeigt, daß insbesondere die unregelmäßige Durchmischung des in den Katalysator einströmenden Gases mit Sauerstoff zu unbefriedigenden Ergebnissen führt, sei es, daß es z.B. zur Rußbildung oberhalb des Katalysators kommt oder zur unzureichenden Wertstoffausbeute, etwa der Ausbeute an Propylen.

Hier setzt die Erfindung an, deren Aufgabe es ist, die Ein- und Durchmischung des Sauerstoffes vor dem Eintritt in den Katalysator insbesondere für Oxidehydrierungsverfahren deutlich zu verbessern.

Mit einem Verfahren der eingangs bezeichneten Art wird diese Aufgabe gemäß der Erfindung dadurch gelöst, daß der Sauerstoff in Reinform, als Luft oder vermischt mit Intertgas oder Wasserdampf einem Ringverteilersystem zugeführt wird und aus einer Vielzahl von Austrittsöffnungen im Ringverteiler in einem von der Senkrechten abweichenden Winkel auf die Katalysatoroberfläche gedüst wird.

Es hat sich gezeigt, daß durch diese Verfahrensweise eine Durchmischung innerhalb sehr kurzer Zeit < 100 ms erreicht wird, so daß die Reaktionszeit in Zonen mit überstöchiometrischen Sauerstoffkonzentrationen und die nicht katalytischen Reaktionen minimiert werden. Da die Vermischung im freien Raum stattfindet und die sauerstoffreiche Mischung keinen Kontakt mit Wänden bzw. dem Katalysator hat, wird die Schädigung von Werkstoffen durch den eingedüsten Sauerstoff minimiert.

Ausgestaltungen der Erfindung ergeben sich aus den Unteransprüchen.

Je nach Konstruktion des Reaktors kann es zweckmäßig sein, die Eindüsung des Sauerstoffes aus einer zylindrischen Ebene im Inneren des Katalysatorbettes in Richtung auf die Reaktorwand vorzunehmen. Dabei kann nach der erfindungsgemäßen Verfahrensweise die Eindüsung mittels einer Mehrzahl von eine zylindrische innere Axialebene bildenden parallelen Rohren mit den Austrittsöffnungen vorsehen.

Eine besonders zweckmäßige Ausgestaltung besteht nach der Erfindung darin, daß die Eindüsung des Sauerstoffes in einer zylindrischen Axialebene etwa 50 bis 300 mm vor der zylindrischen Innenwand des Katalysatorbettes erfolgt, die eine Sauerstoffverweilzeit von ≤ 1 Sekunde im Raum vor dem Katalysatorbett sicherstellt. Die Verweilzeit kann dabei 100 ms, vorzugsweise ≤ 15 ms betragen.

Zur Lösung der gestellten Aufgabe sieht die Erfindung auch eine Vorrichtung vor, die sich auszeichnet durch einen Ringverteiler mit einer Mehrzahl von eine innere zylindrische Ebene bildenden, mit Austrittsöffnungen versehenen Rohren vor der zylindrischen Innenfläche des Katalysatorbettes, wobei die Austrittsöffnungen zur Abgabe des Sauerstoffes in einem von der Senkrechten abweichenden Winkel auf die Katalysatorzylinderfläche ausgebildet sind.

In vorteilhafter Ausgestaltung kann vorgesehen sein, daß die Gasaustrittsöffnungen in wechselnder Folge zu benachbarten Austrittsöffnungen eines benachbarten Ringrohres ausgerichtet sind, wobei benachbarte Gasaustrittsöffnungen unterschiedliche Strömungsaustrittsrichtungen aufweisen können.

Eine weitere vorteilhafte Ausgestaltung der Erfindung besteht darin, daß die Gasaustrittsöffnungen als Bohrungen oder Düsen ausgebildet sind.

Zum Stand der Technik seien an dieser Stelle einige Literaturstellen erwähnt. So DE-43 33 372-A, die ein Herstellungsverfahren von Olefinen aus Methan enthaltenen Gasmischungen offenbart, die DE-32 40 089-A oder die US-5 935 489, die ein Verfahren und eine Vorrichtung zur Synthesegasherstellung mit partieller Oxidation zeigt oder die US-Patentschriften 2 518 583, 2 809 981 oder 2 954 281. Der US-2 584 391 ist die Eindüsung eines Reaktanden in von der Senkrechten abweichenden Richtungen zu entnehmen, um einen effektiveren Kontakt zwischen festen und gasförmigen Partikeln in einem fluidisierten Bett eines Reaktors zu erreichen. Zum weiteren Stand der Technik können auch noch die US-2 632 692, US-3 208 833, die GB-2 065 492-A oder die EP-0 364 664-B genannt werden.

Weitere Merkmale, Einzelheiten und Vorteile der Erfindung ergeben sich aufgrund der nachfolgenden Beschreibung sowie anhand der Zeichnung. Diese zeigt in
- Fig. 1: eine stark vereinfachte Darstellung einer Vorrichtung nach der Erfindung,
- Fig. 2: eine Detailvergrößerung im Bereich des Katalysators mit angedeuteter Gaszuströmung sowie in
- Fig. 3: einen Querschnitt durch den Reaktor im Bereich des Katalysators.

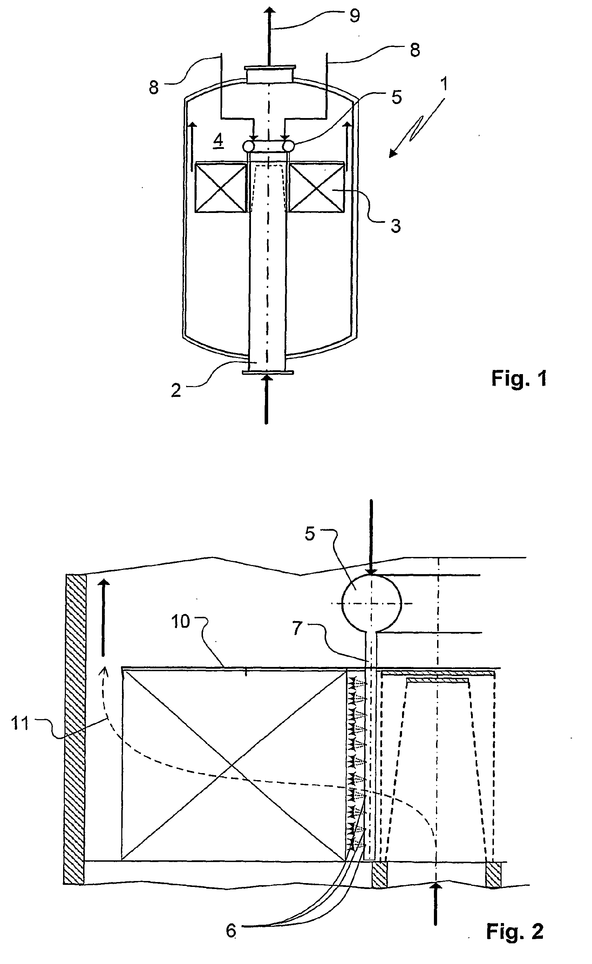

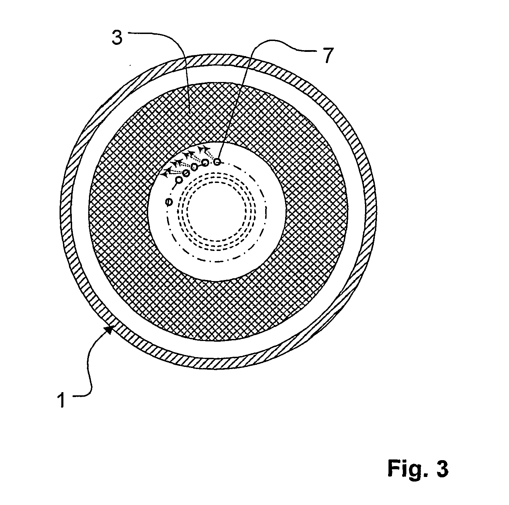

Der in Fig. 1 im Schnitt schematisch dargestellte, allgemein mit 1 bezeichnete Oxireaktor weist ein Gaseintrittsrohr 2 auf, das einen Katalysator 3 zentrisch bis zu einer oberen Abdeckung 10 durchsetzt, wobei im oberen Bereich des Reaktors 1 ein Gasdom 4 ausgebildet ist. Im Gasdom 4 ist ein Ringverteiler 5 für Sauerstoff in Reinform, als Luft oder vermischt mit Inertgas oder Wasserdampf vorgesehen, wobei dieses Ringrohr 5 mit einer Mehrzahl von mit Austrittsöffnungen 6 ausgestatteten, senkrecht nach unten weisenden Rohren 7 ausgerüstet ist. Die Austrittsöffnungen 6 sind so angeordnet, daß der jeweilige Gasstrahl in einem von der Senkrechten abweichenden Winkel auf die zylindrische innere Katalysatoroberfläche auftrifft, was in den Fig. 2 und 3 durch kleine Pfeile dargestellt ist.

In Fig. 1 ist der O₂- bzw. Gaseintritt in den Ringverteiler 5 durch Pfeile 8 angedeutet, der Gasaustritt aus dem Reaktor mit einem Pfeil 9.

Der Strömungsweg des den Reaktor durchströmenden Gases mit dem zusätzlichen Sauerstoff ist in Fig. 2 mit einem gestrichelten Pfeil 11 angedeutet.

Natürlich ist das beschriebene Ausführungsbeispiel der Erfindung noch in vielfacher Hinsicht abzuändern, ohne den Grundgedanken zu verlassen, insbesondere können die Auftrittswinkel je nach Bauart des Reaktors auch in anderer als der dargestellten Weise gewählt werden. Auch kann es in bestimmten Einsatzfällen zweckmäßig sein, die Durchströmung der Katalysatorpackung von außen nach innen vorzusehen. Dies wird zwar bei Oxireaktionen wegen der Volumenzunahme nicht immer benötigt, kann aber in einigen Fällen dennoch von Vorteil sein (hohe Raumgeschwindigkeiten) wegen Nebenproduktbildung od. dgl.

## Patentansprüche

1. Verfahren zum Eindüsen von Sauerstoff in einen Synthese-reaktor, beispielsweise zur Oxidehydrierung, mit im wesentlichen radialer Durchströmung des Gasgemisches durch eine Katalysatorpackung,
**dadurch gekennzeichnet,**
**daß** der Sauerstoff in Reinform, als Luft oder vermischt mit Inertgas oder Wasserdampf einem Ringverteilersystem zugeführt wird und aus einer Vielzahl von Austrittsöffnungen im Ringverteilersystem in einem von der Senkrechten abweichenden Winkel auf die Katalysatoroberfläche aufgedüst wird.

2. Verfahren nach Anspruch 1,
**dadurch gekennzeichnet,**
**daß** die Eindüsung des Sauerstoffes aus einer zylindrischen Ebene im Inneren des Katalysatorbettes in Richtung auf die Reaktorwand vorgenommen wird.

3. Verfahren nach Anspruch 1 oder 2,
**dadurch gekennzeichnet,**
**daß** die Eindüsung mittels einer Mehrzahl von eine zylindrische innere Axialebene bildenden parallelen Rohren mit den Austrittsöffnungen vorgenommen wird.

4. Verfahren nach einem der vorangehenden Ansprüche,
**dadurch gekennzeichnet,**
**daß** die Eindüsung des Sauerstoffes in einer zylindrischen Axialebene etwa 50 bis 300 mm vor der zylindrischen Innenwand des Katalysatorbettes erfolgt, die eine Sauerstoffverweilzeit von ≤ 1 Sekunde im Raum vor dem Katalysatorbett sicherstellt.

5. Vorrichtung zum Eindüsen von Sauerstoff in einen Synthesereaktor, beispielsweise zur Oxidehydrierung, mit im wesentlichen radialer Durchströmung des Gasgemisches durch eine Katalysatorpackung, insbesondere zur Durchführung des Verfahrens nach einem der vorangehenden Ansprüche,
**gekennzeichnet durch**
einen Ringverteiler mit einer Mehrzahl von eine innere zylindrische Ebene bildenden, mit Austrittsöffnungen (6) versehenen Rohren (7) vor der zylindrischen Innenfläche des Katalysatorbettes, wobei die Austrittsöffnungen (6) zur Abgabe des Sauerstoffes in einem von der Senkrechten abweichenden Winkel auf die zylindrische Katalysatoroberfläche ausgerichtet sind.

6. Vorrichtung nach Anspruch 5,
**dadurch gekennzeichnet,**
**daß** die Gasaustrittsöffnungen (6) in wechselnder Folge zu benachbarten Austrittsöffnungen eines benachbarten Ringrohres ausgerichtet sind.

7. Vorrichtung nach Anspruch 5 oder 6,
**dadurch gekennzeichnet,**
**daß** benachbarte Gasaustrittsöffnungen (6) unterschiedliche Strömungsaustrittsrichtungen aufweisen.

8. Vorrichtung nach Anspruch 5 oder einem der folgenden,
**dadurch gekennzeichnet,**
**daß** die Gasaustrittsöffnungen (6) als Bohrungen oder Düsen ausgebildet sind.

## Claims

1. Method of injecting oxygen into a synthesis reactor, for example for oxide hydrogenation, with the gas mixture flowing substantially radially through a catalyst packing,
**characterized in that**
the oxygen is fed in pure form, as air or mixed with inert gas or water vapour to a ring-distributor system and is injected from a large number of outlets in the ring-distributor system onto the catalyst surface at an angle deviating from the perpendicular.

2. Method according to claim 1,
**characterized in that**
the injection of the oxygen is carried out from a cylindrical plane inside the catalyst bed in the direction of the reactor wall.

3. Method according to claim 1 or 2,
**characterized in that**
the injection is carried out by means of a plurality of parallel pipes forming a cylindrical inner axial plane with the outlets.

4. Method according to one of the previous claims,
**characterized in that**
the injection of the oxygen takes place in a cylindrical axial plane approximately 50 to 300 mm before the cylindrical inner wall of the catalyst bed which ensures an oxygen residence time of ≤ 1 second in the space before the catalyst bed.

5. Device for injecting oxygen into a synthesis reactor, for example for oxide hydrogenation, with the gas mixture flowing substantially radially through a catalyst packing, in particular for carrying out the method according to one of the previous claims,
**characterized by**
a ring-distributor with a plurality of pipes (7), provided with outlets (6), forming an inner cylindrical plane before the cylindrical inner surface of the catalyst bed, wherein, for the delivery of the oxygen, the outlets (6) are aligned at an angle deviating from the perpendicular towards the cylindrical catalyst surface.

6. Device according to claim 5,
**characterized in that**
the gas outlets (6) are aligned in alternating sequence to adjacent outlets of an adjacent ring pipe.

7. Device according to claim 5 or 6,
**characterized in that**
adjacent gas outlets (6) have different flow-discharge directions.

8. Device according to claim 5 or one of the following,
**characterized in that**
the gas outlets (6) are formed as bores or nozzles.

## Revendications

1. Procédé pour l'introduction d'oxygène par buses dans un réacteur de synthèse, par exemple pour l'hydrogénation oxydée, avec un écoulement sensiblement radial du mélange gazeux à travers un garnissage de catalyseur, **caractérisé en ce que** l'oxygène dans la forme pure, en tant qu'air ou mélangé avec un gaz inerte ou avec de la vapeur d'eau, est amené dans un système de distribution annulaire et est introduit par buses à partir d'une pluralité d'ouvertures de sortie dans un système de distribution annulaire selon un angle s'écartant de la verticale sur la surface du catalyseur.

2. Procédé selon la revendication 1, **caractérisé en ce que** l'introduction de l'oxygène par buses à partir d'un plan cylindrique à l'intérieur du lit de catalyseur s'effectue dans la direction de la paroi du réacteur.

3. Procédé selon la revendication 1 ou 2, **caractérisé en ce que** l'introduction de l'oxygène par buses au moyen d'une pluralité de tubes parallèles formant un plan axial interne cylindrique s'effectue avec les ouvertures de sortie.

4. Procédé selon l'une des revendications précédentes, **caractérisé en ce que** l'introduction de l'oxygène par buses dans un plan axial cylindrique s'effectue à environ 50 jusqu'à 300 mm de la paroi interne cylindrique du lit du catalyseur qui assure un temps de séjour d'oxygène de ≤ 1 seconde dans la zone en amont du lit du catalyseur.

5. Dispositif pour l'introduction d'oxygène par buses dans un réacteur de synthèse, par exemple pour l'hydrogénation oxydée, avec le passage sensiblement radial du mélange gazeux à travers un garnissage de catalyseur, en particulier pour la réalisation du procédé selon l'une des revendications précédentes, **caractérisé par** un distributeur annulaire avec une pluralité de tubes (7) munis d'ouvertures de sortie (6) formant un plan cylindrique interne en amont de la face interne cylindrique du lit de catalyseur, tandis que les ouvertures de sortie (6) pour la distribution de l'oxygène selon un angle s'écartant de la verticale sont alignées sur la surface de catalyseur cylindrique.

6. Dispositif selon la revendication 5, **caractérisé en ce que** les ouvertures de sortie de gaz (6) sont alignées en séquences alternées par rapport aux ouvertures de sortie limitrophes d'un tube annulaire limitrophe.

7. Dispositif selon la revendication 5 ou 6, **caractérisé en ce que** les ouvertures de sortie de gaz limitrophes (6) présentent différentes directions de sortie d'écoulement.

8. Dispositif selon la revendication 5 ou l'une des revendications suivantes, **caractérisé en ce que** les ouvertures de sortie de gaz (6) sont formées en tant qu'alésages ou buses.
